# DEMANDE DE BREVET EUROPEEN

(11) **EP 3 671 563 A1**
(43) Date de publication de la demande: **24.06.2020**
(21) Numéro de dépôt: 18306795.8
(22) Date de dépôt: 21.12.2018
(51) Int. Cl.: G06K 19/077, H01Q 1/22

(54) **PROCÉDÉ DE FABRICATION D'UNE CARTE À PUCE MÉTALLIQUE, DE PRÉFÉRENCE AVEC ANTENNE RELAIS**

(71) Demandeur: Thales Dis France SA, 92190 Meudon (FR)
(72) Inventeur: MENDEZ, Lucile, 13881 Gémenos Cedex (FR); COLOMBARD, Claude, 13881 Gémenos Cedex (FR); SEBAN, Frederick, 13881 Gémenos Cedex (FR); BUYUKKALENDER, Arek, 13881 Gémenos Cedex (FR); MERIDIANO, Jean-Luc, 13881 Gémenos Cedex (FR)
(74) Mandataire: Milharo, Emilien

(57) **Abrégé**

L'invention concerne un procédé de fabrication d'une carte à puce radiofréquence comportant un insert (1A, 1B) avec antenne relais, configurée de manière à être couplée électro-magnétiquement avec un module radiofréquence inséré dans une cavité (3) de la carte,
caractérisé en ce que la formation de l'insert comprend les étapes suivantes :
- formation d'une spirale d'antenne (12), de ladite cavité (3) et une plaque de condensateur (4) dans une plaque de métal, ladite spirale comportant une extrémité terminale externe (2E, 2F) et une extrémité terminale interne (21), l'une au moins formant ou connectant une première plaque de condensateur (4),
- adjonction d'une seconde plaque (5) de condensateur en regard de l'une au moins desdites deux portions terminales de l'antenne (21, 2E, 2F), ladite seconde plaque (5) s'étendant via un pont conducteur isolé (6) jusqu'à l'autre portion terminale (2 E, 2D) pour la connecter de manière capacitive ou ohmique et former un circuit résonant (RLC),
- insertion de matière isolante entre les spires (2) de la spirale d'antenne (12).

L'invention concerne également un insert pour carte correspondant obtenu notamment par le procédé.

## Description

### Domaine de l'invention.

L'invention concerne le domaine des cartes à puce sans contact comportant un corps de carte à forte teneur métallique ou appelée communément carte métallique (ou métal).

Elle vise en particulier et de préférence un procédé de fabrication d'une carte à puce de communication radiofréquence, comportant un insert comprenant une antenne relais (antenne passive, amplificatrice ou booster) configurée de manière à être couplée électro-magnétiquement avec un module radiofréquence inséré dans une cavité de la carte. A la limite, l'invention peut envisager une antenne normale non relais.

Les cartes à puce peuvent être du type hybride (contacts et sans-contact) ou purement sans-contact (sans bornier de contacts électriques).

Les cartes à puce peuvent avoir un module de carte à puce comportant sur un substrat isolant, un transpondeur radiofréquence avec la puce et l'antenne. Les modules de carte à puce radiofréquence sont généralement encartés dans une cavité du corps de carte.

L'invention vise plus particulièrement les cartes bancaires comportant un corps majoritairement métallique en volume et/ou en masse.

### Art antérieur

On connait un procédé de réalisation d'un insert (ou inlay en anglais) comprenant une antenne en forme de spirale découpée dans une feuille de métal et présentant ses deux extrémités terminales d'interconnexion disposées respectivement à l'intérieur et à l'extérieur des spires. Une résine isolante est coulée sur l'antenne, à l'exception des portions terminales d'interconnexion, de manière à remplir l'espace inter-spires et pour former une cavité de réception d'un module à puce électronique sans contact. Un module est inséré dans la cavité pour interconnecter de manière ohmique les portions terminales d'interconnexion.

Le brevet FR 2743649 décrit un module de carte à puce à antenne et /ou plages de contact pouvant être incorporé dans une cavité de corps de carte ou pouvant former une étiquette électronique RFID.

Le brevet EP1031939 (B1) décrit une carte radiofréquence (ou sans-contact) comprenant une antenne relais (ou passive) en bobinée en forme de huit, logée dans un corps de carte et couplée électromagnétiquement ou inductivement avec l'antenne du module. L'antenne (relais) ou passive comporte une bobine étroite concentrique avec l'antenne du module et une bobine large pour capter le cham électromagnétique d'un lecteur.

Par ailleurs, on connait également des dispositifs radiofréquences hybrides, tels que des cartes à contacts et sans-contact, comportant un module de carte à puce à contacts incorporé dans un corps de carte et connecté à une antenne logée dans le corps de carte.

Par ailleurs, il existe des cartes bancaires comportant des éléments métalliques en insert à l'intérieur le corps de carte en matière plastique ou en surface externe du corps de carte tel de l'aluminium, du titane, de l'or. Le métal procure une sensation de lourdeur de la carte qui est très appréciée par les utilisateurs. Il donne aussi un aspect esthétique visible qui en fait un produit haut de gamme pour privilégiés.

La demande internationale WO 2018/152218 A1 décrit une carte à puce ayant du métal s'étendant jusqu'au bord de la carte. Dans un mode, elle comprend un cadre métallique s'étendant en bordure de la carte et un inlay radiofréquence à l'intérieur.

La demande de brevet US 2015/0269477 A1 décrit une carte à puce hybride à interface duale comportant une plaque de métal disposé dans une corps de carte en plastique, une antenne booster, et un module à antenne et à plages de contact disposé dans une cavité du corps de carte. Une plaque de métal peut être disposée autour d'une portion périphérique du corps de carte et en forme de boucle ouverte autour d'une antenne relais.

Il y a donc actuellement une forte demande pour ce genre de carte à puce à forte teneur de métal.

### Problème technique.

L'invention vise à résoudre les inconvénients précités.

L'invention consiste selon un aspect préféré à avoir des cartes à puce métalliques les plus lourdes possibles avec du métal tout en ayant de bonnes performances radiofréquences.

En particulier, l'invention vise une structure de module à puce électronique pour carte à puce qui permette d'avoir de de bonnes performances radiofréquences dans deux directions au moins (perpendiculaires au plan principal de la carte), même si la carte contient un maximum de métal qui généralement fait écran aux champs électromagnétiques d'un lecteur sans-contact.

La carte peut de préférence avoir également une structure satisfaisant notamment les contraintes de tenue mécanique du standard ISO des cartes à puce et autres tests de durabilité dans le temps. De telles cartes peuvent être conformes notamment au standard ISO 78016 et/ ou ISO / IEC 14443 ou équivalents.

L'invention vise à résoudre les inconvénients ou à satisfaire objectifs précités. Elle vise de préférence à avoir de bonnes performances radiofréquences avec une carte ayant du métal pouvant s'étendre ou non jusqu'aux bords de la carte.

### Résumé de l'invention.

L'invention peut consister à former une antenne relais dans l'épaisseur même d'une plaque métallique avec une épaisseur pouvant être supérieure à 200 ou 300 µm.

A cet effet, l'invention a pour objet un procédé de fabrication d'une carte à puce radiofréquence comportant un insert avec antenne relais configurée de manière à être couplée électro-magnétiquement avec un module radiofréquence inséré dans une cavité de la carte,
caractérisé en ce que la formation de l'insert comprend les étapes suivantes :
- formation d'une spirale d'antenne, de ladite cavité et une plaque de condensateur dans une plaque de métal, ladite spirale comportant une extrémité terminale externe et une extrémité terminale interne, l'une au moins formant une première plaque de condensateur,
- adjonction d'une seconde plaque de condensateur en regard de l'une au moins desdites deux portions terminales et s'étendant via un pont conducteur isolé jusqu'à l'autre portion terminale pour la connecter de manière capacitive ou ohmique pour former un circuit résonant (RLC),
- insertion de matière isolante entre les spires de la spirale d'antenne.

Grâce à l'invention, l'insert peut comprendre une masse métallique importante au niveau de l'antenne même puisqu'elle est formée dans l'épaisseur d'une plaque de métal pouvant avoir sensiblement ou presque l'épaisseur d'une carte à puce standard.

La connexion du module radiofréquence avec l'antenne est facilitée puisqu'il est fait recours d'une antenne relais. Le module est juste fixé à la carte notamment par adhésif sans connexion ohmique (ou soudure) avec l'antenne relais.

Selon d'autres caractéristiques :
- La spirale d'antenne peut s'étendre de préférence jusqu'au bord de la carte ;
- L'insert peut être est recouvert d'au moins une feuille ou couche isolante de recouvrement sur chaque face principale ;
- Le module peut comprendre une antenne sur un support isolant connecté à une puce radiofréquence ;
- La spirale d'antenne peut avoir une épaisseur comprise entre 400 et 700 µm ;
- La cavité peut être formée notamment par formation des pistes ou spires et/ou amincissement de la largeur des pistes ou spires autour de la cavité ;
- La cavité peut être formée en partie dans l'épaisseur de la plaque et/ou quelques spires ;
- Les spires d'antenne peuvent être formées par découpe mécanique, poinçonnage, découpe laser, moulage de matériaux conducteurs.

L'invention a également pour objet une carte à puce radiofréquence comprenant un insert (de carte à puce) comportant de préférence une antenne relais configurée de manière à être couplée électro-magnétiquement avec un module radiofréquence inséré dans une cavité de la carte, caractérisée en ce que l'insert comprend:
- une spirale d'antenne d'épaisseur (pouvant être comprise notamment entre 300 et 700 µm), ladite cavité et une plaque de condensateur, ladite spirale comportant une extrémité terminale externe et une extrémité terminale interne, l'une extrémité au moins formant ou connectant une première plaque de condensateur,
- une seconde plaque de condensateur ajoutée en regard de l'une au moins desdites deux portions terminales de l'antenne, ladite seconde plaque s'étendant via un pont conducteur isolé jusqu'à l'autre portion terminale pour la connecter de manière capacitive ou ohmique et former un circuit résonant (RLC),
- de la matière isolante insérée entre les spires de la spirale d'antenne.

Selon d'autres caractéristiques :
- alternativement, (selon un mode moins préféré) l'antenne de l'insert peut configurée pour être connectée autrement (connexion ohmique, capacitive à un module radiofréquence) ;
- La spirale d'antenne peut s'étendre jusqu'au bord de la carte ;
- La spirale d'antenne ou la première plaque de condensateur peut être amincie localement au niveau de l'emplacement de la seconde plaque de condensateur, notamment pour éviter une surépaisseur localement de l'antenne relais ; Ainsi, le reste de l'antenne relais peut avoir une épaisseur avoisinant celle (0,76 mm) d'une carte à puce standard ISO 7816 et conserver un maximum de masse.
- L'insert peut être recouvert d'au moins une feuille ou couche isolante de recouvrement ou de décoration sur chacune de ses faces principales pour former un corps de carte.
- La spirale d'antenne relais peut présenter des spires ayant une section carrée ou rectangulaire obtenue par découpe laser, ou poinçonnage.

### Descriptif des figures :

- La figure 1 illustre une étape de fabrication d'un insert pour carte radiofréquence conformément au mode préféré de l'invention ;
- La figure 2 illustre une étape subséquente d'assemblage comprise dans la fabrication de l'insert pour carte radiofréquence, conformément au mode préféré de l'invention ;
- La figure 3 illustre une variante de réalisation de la cavité 3bis dans l'antenne relais, au cours du procédé de fabrication d'un insert pour carte radiofréquence;
- La figure 4 illustre des étapes possibles d'un procédé de fabrication d'un insert à antenne relais pour carte radiofréquence.

### Description.

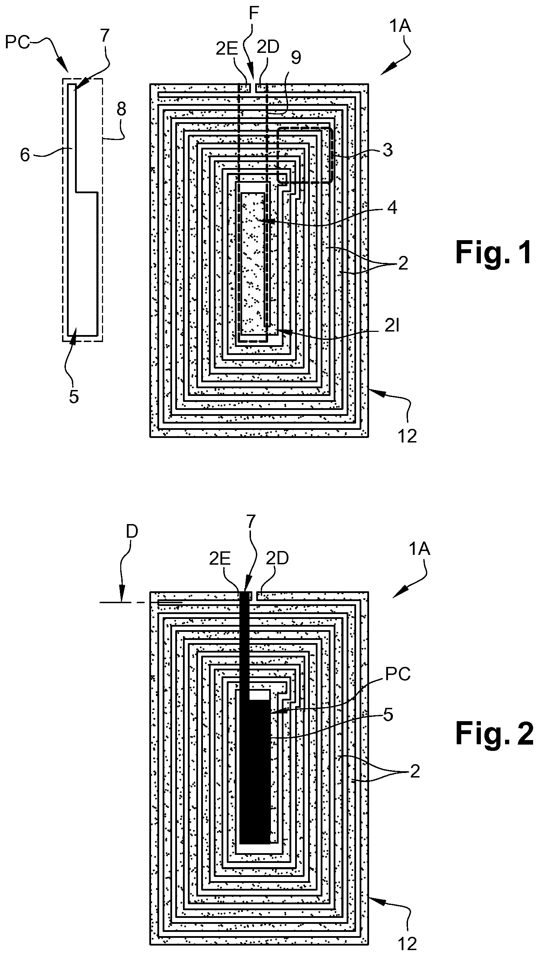

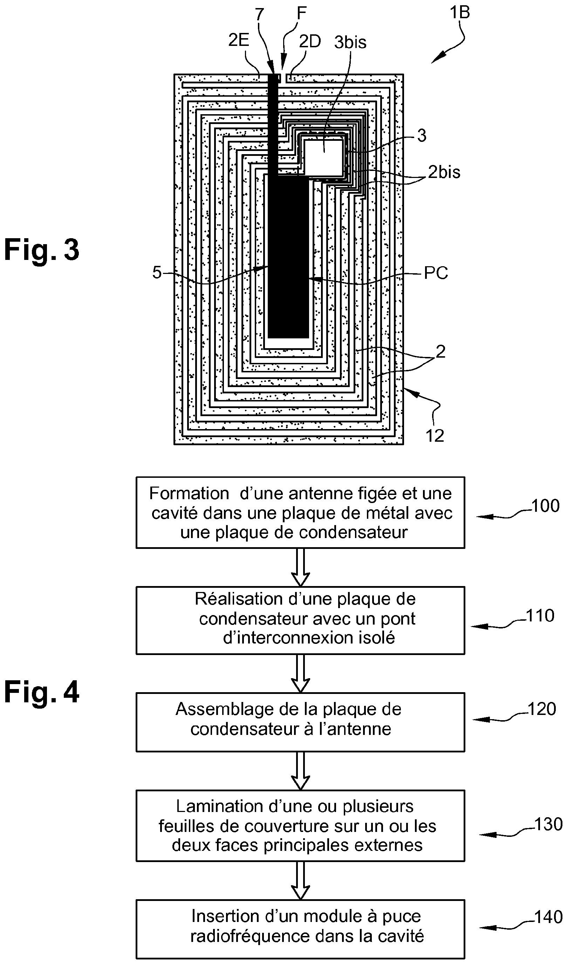

A la figure 1, (pouvant correspondre à l'étape 100 (fig. 4), est illustrée une première étape possible du procédé de fabrication d'une carte à puce radiofréquence selon un mode préféré de réalisation.

On rappelle que la carte envisagée par l'invention est destinée à comporter un insert (ou inlay en anglais). Cet insert envisagé peut comprendre selon l'invention une antenne relais (passive ou amplificatrice) qui est configurée de manière à être couplée électro-magnétiquement (ou inductivement) avec un module (ou transpondeur) radiofréquence. Ce dernier peut être inséré dans une cavité 3, 3bis de l'insert ou de la carte ou positionné à un emplacement correspondant 3.
Par exemple, le module peut être sous forme de tag ou étiquette RFID de structure fine simplement fixé sur le corps de carte à l'emplacement 3 du module, sans être encarté dans une cavité.

Bien que l'antenne soit configurée pour assurer un couplage ou connexion inductif avec le module, il n'est pas exclu de configurer l'antenne pour avoir ses deux extrémités 2I, (2E, 2D) parvenant proche du module radiofréquence de manière à le connecter en connexion ohmique ou capacitive. Par exemple, son extrémité interne 2I pourrait s'arrêter au bord de la cavité ou emplacement 3 de module. Et son extrémité externe 2E ou 2F pourrait être ramenée avec un pont conducteur 6 isolé électriquement à l'interface avec l'antenne 2.

Selon une caractéristique de ce mode préféré, le procédé peut comprendre l'étape de formation d'une spirale d'antenne 12, d'une cavité 3 (facultative mais préférée pour des modules classiques type carte à puce) et d'une plaque de condensateur 4 dans une plaque de métal, ladite spirale comportant une extrémité terminale externe et une extrémité terminale interne, l'une au moins formant une première plaque de condensateur,

La spirale d'antenne 12 peut être fournie ainsi ou obtenue par une découpe dans une plaque de métal. Dans l'exemple (fig. 1), un motif d'antenne 3 (ou d'une pluralité d'antenne) est formée dans une plaque de métal notamment par découpe laser. Chaque antenne peut être extraite de sa plaque de base métallique, notamment après laminage de feuille de recouvrement et/ou de décoration.

Alternativement, elle peut être formée par poinçonnage ou par moulage. La plaque est ici en acier, mais elle peut être de toute matière métallique connue telles que de l'or, du tungstène, de l'argent, de l'aluminium, du cuivre ou alliages.

La cavité 3 peut être formée par amincissement de l'épaisseur des spires (ou amincissement de l'épaisseur de la plaque de métal avant de découpe des spires) ; Elle peut être obtenue par usinage ou moulage dans un emplacement 3 indiqué en pointillé sur la figure 1.

Alternativement, (figure 3) la cavité peut être formée par un motif d'antenne 2bis qui contourne l'emplacement 3 de la cavité. La largeur des spires est plus réduite dans la zone autour de la cavité. La largeur des spires peut être de quelques millimètres aux environs de la cavité alors que les spires proches du bord de la carte (en particulier la spire externe) peuvent être beaucoup plus larges de (0,5 cm ou 1 cm) à 2 cm.

Ici, il y a une formation des pistes ou spires 2 sans amincissement de la largeur des pistes ou spires autour de la cavité. L'emplacement de cavité 3 comprend une ouverture 3bis traversant la plaque de métal découpée 2.

Concernant la plaque de condensateur 4 reliée à l'antenne, dans l'exemple (fig. 1), la spirale 12 se termine à son extrémité interne (extrémité terminale 4) par une plaque de métal 3 qui est obtenue de la même manière que les spires d'antenne. Cette plaque forme une première plaque de condensateur qui est destinée à coopérer avec une seconde plaque de condensateur 5.

Selon une caractéristique, le procédé prévoit, de préférence, une adjonction d'une seconde plaque de condensateur 5 en regard de l'une au moins desdites deux portions terminales 4 ; La seconde plaque s'étend via un pont conducteur isolé 6 jusqu'à l'autre portion terminale 2D, 2E pour la connecter de manière capacitive ou ohmique pour former un circuit résonant (RLC).

Dans l'exemple figure 1, Le procédé prévoit de réaliser une portion PC de plaque métallique conductrice notamment par découpe dans autre plaque de métal. La portion PC comprend une zone 5 (formant seconde plaque de condensateur) destinée à se positionner en regard de la première plaque de condensateur 4. Elle comprend aussi une zone 6 formant un pont conducteur. Toute la face inférieure de la portion PC peut comporter un isolant (déposé notamment par jet de matière, sérigraphie ou autre technique connue) à l'exception de son extrémité étroite 7.

La seconde portion PC peut être amincie par opération 8 de rectification ou fraisage (ou découpée dans une plaque de métal déjà mince avant son assemblage avec l'antenne 2).

De même, un amincissement 9 peut être prévu à l'emplacement de la portion PC, indiquée sur la figure de la seconde portion PC peut être de préférence amincie notamment par fraisage ou autre.

Ainsi, lors de l'assemblage des deux plaques de condensateur, il n'y a pas de surépaisseur au niveau du condensateur, ni du pont conducteur reliant l'extrémité externe de spirale à la seconde plaque de condensateur 5.

Dans les figures, des mêmes références d'une figure à une autre représentent des éléments identiques ou similaires.

A la figure 2, est illustré l'assemblage de l'antenne 2 avec l'élément de condensateur PC de la figure 1.
La seconde portion PC de plaque de condensateur est positionnée en regard de la première plaque 4 et connectée via son extrémité 7 par soudure électrique à une extrémité externe 2E de la spirale d'antenne 12. Alternativement, le pont conducteur isolé 6 pourrait être connecté, via son extrémité 7, à une autre extrémité adjacente 2D de l'antenne.
La spire externe est sectionnée au niveau « F » sur son côté transversal externe mais elle pourrait être sectionnée au niveau « D » dans l'angle gauche rejoignant le motif d'antenne.

Inversement, les première 4 et seconde portions 5 de plaque de condensateur peuvent se trouver à l'extérieur (ou en bordure externe) de la spirale 12 (plutôt qu'à l'intérieur de la spirale) et être connectée de manière capacitive tandis que l'extrémité 4 de la spire centrale est connectée de manière ohmique (ex. soudure) à une extrémité 5 de la plaque PC.

Alternativement, la portion PC peut être posée au même emplacement en étant isolée à l'interface avec l'antenne et former une connexion capacitive.

Selon une caractéristique, l'invention selon ce mode préféré prévoit une étape 110 destiné à maintenir les spires 2 bien espacées les unes des autres. A cet, effet, le procédé peut prévoir une insertion de matière isolante entre les spires 2 de la spirale d'antenne 12 notamment par une lamination (ou laminage) à chaud ou à froid ou par distribution de matière isolante fluide polymérisable entre les spires.

Cette étape de maintien des spires en place les unes par rapport aux autres, peut être réalisée avant l'étape 120 d'adjonction de la plaque de condensateur PC ou après.

Alternativement, le procédé peut prévoir de laminer ou presser à chaud au moins une feuille thermoplastique ou thermofusible sur l'antenne. La matière fluidifiée s'écoule entre les spires puis durcit en refroidissant.

D'une manière générale dans tous les exemples, la spirale d'antenne 12 peut s'étendre jusqu'au bord de la carte. Cette caractéristique peut être obtenue après extraction de l'antenne d'une plaque grand format contenant une pluralité d'antenne découpée.

Alternativement, l'antenne peut se trouver noyée complètement dans de la matière isolante (par exemple surmoulée).

L'antenne peut être extraite d'une plaque pour être déposée à l'intérieur d'un cadre isolant agencé sur un substrat isolant ayant une surface plus grande que l'antenne puis une feuille et/ou de la résine est déposée sur l'antenne pour effectuer une lamination.

Ainsi chaque insert peut être recouvert d'au moins une feuille ou couche isolante de recouvrement sur chaque face principale.

Une fois la cavité 3 réalisée, L'antenne peut recevoir dans la cavité un module radiofréquence (non représentée) qui comprend de manière classique une antenne L1 sur un support isolant connecté à une puce radiofréquence, le cas échéant, une capacité d'accord peut être incluse dans la puce radiofréquence. Le module peut être uniquement de type sans-contact ou de type hybride contacts et sans-contact. Dans tous les cas préférés (notamment pour des raisons de performance ou de facilité d'assemblage ou de connexion du module radiofréquence), le module peut être couplé inductivement avec l'antenne relais.

Le module radiofréquence peut être inséré dans la cavité 3 avant ou après l'adjonction de feuilles de couverture et/ou de finition (de l'étape 130).
Dans l'exemple Fig. 4, à l'étape 130, le procédé effectue un laminage de feuilles sur l'insert, la cavité 3 (fig. 3) ou l'espace inter spires peut avoir été remplie de résine. Puis, à l'étape 140, le procédé effectue un usinage de cavité 3 avant d'insérer le module antenne (non représenté). Le module est ainsi en position de couplage avec l'insert comprenant une antenne de type relais ou passive (circuit RLC) qui procure une extension de portée de communication radiofréquence du module antenne (ou transpondeur de communication radiofréquence). L'antenne relais R comprend le circuit RLC formé de la spirale 12 (inductance L), et du condensateur 4, 5 (C) ; La résistance 5 est implicite.

Dans tous les exemples, la spirale d'antenne peut avoir une épaisseur comprise entre 300 et 700 µm.

Les spires peuvent être au moins aussi larges dans le plan de la carte que hautes dans le sens perpendiculaire à ce plan. De préférence, les spires peuvent être fines notamment autour du module (quelques centaines de microns, voire 1 mm à quelques millimètres) et larges au moins au niveau de la spire externe de l'ordre de 0,5 cm du 1 cm.

Dans tous les exemples également, la plaque du corps de carte peut comprendre un assemblage de plaques métalliques soudées ensemble ou assemblées par l'intermédiaire d'une couche fine adhésive. Ce dernier assemblage peut améliorer la tenue mécanique de flexion / torsion.

De même, la spire externe peut avoir une largeur plus importante que les autres spires. La largeur peut être par exemple de 0,5 à 1 cm de manière à présenter plus de masse en bordure.

## Revendications

1. Procédé de fabrication d'une carte à puce radiofréquence comportant un insert (1A, 1B) avec antenne relais, configurée de manière à être couplée électro-magnétiquement avec un module radiofréquence inséré dans une cavité (3) de la carte,
**caractérisé en ce que** la formation de l'insert comprend les étapes suivantes :
- formation d'une spirale d'antenne (12), de ladite cavité (3) et une plaque de condensateur (4) dans une plaque de métal, ladite spirale comportant une extrémité terminale externe (2E, 2F) et une extrémité terminale interne (2I), l'une au moins formant ou connectant une première plaque de condensateur (4),
- adjonction d'une seconde plaque (5) de condensateur en regard de l'une au moins desdites deux portions terminales de l'antenne (2I, 2E, 2F), ladite seconde plaque (5) s'étendant via un pont conducteur isolé (6) jusqu'à l'autre portion terminale (2E, 2D) pour la connecter de manière capacitive ou ohmique et former un circuit résonant (RLC),
- insertion de matière isolante entre les spires (2) de la spirale d'antenne (12).

2. Procédé selon la revendication précédente, **caractérisé en ce que** la spirale d'antenne (12) s'étend jusqu'au bord de la carte.

3. Procédé selon l'une des revendications précédentes, **caractérisé en ce que** l'insert est recouvert d'au moins une feuille ou couche isolante de recouvrement sur chaque face principale de l'insert.

4. Procédé selon l'une des revendications 2 ou 3, **caractérisé en ce que** le module comprend une antenne sur un support isolant connecté à une puce radiofréquence.

5. Procédé selon l'une des revendications précédentes, **caractérisé en ce que** la spirale d'antenne (12) a une épaisseur comprise entre 400 µm et 700 µm.

6. Procédé selon l'une des revendications précédentes, **caractérisé en ce que** cavité ((3, 3bis) peut être formée notamment par formation des pistes ou spires et/ou amincissement de la largeur des pistes ou spires autour de la cavité (3bis).

7. Procédé selon l'une des revendications précédentes, **caractérisé en ce que** la cavité (3, 3bis) est formée en partie dans l'épaisseur de la plaque et/ou quelques spires.

8. Carte à puce radiofréquence comportant un insert (1A, 1B) avec antenne relais, configurée de manière à être couplée électro-magnétiquement avec un module radiofréquence inséré dans une cavité (3) de la carte,
**caractérisée en ce que** l'insert comprend:
- une spirale d'antenne (12) d'épaisseur comprise entre 400 et 700 µm, ladite cavité (3) et une plaque de condensateur (4), ladite spirale comportant une extrémité terminale externe (2E) et une extrémité terminale interne (2I), l'une extrémité (2E, 2I) au moins formant ou connectant une première plaque de condensateur (4),
- une seconde plaque (5) de condensateur ajoutée en regard de l'une au moins desdites deux portions terminales de l'antenne (2I, 2E), ladite seconde plaque (5) s'étendant via un pont conducteur isolé (6) jusqu'à l'autre portion terminale (2E) pour la connecter de manière capacitive ou ohmique et former un circuit résonant (RLC),
- de la matière isolante insérée entre les spires (2) de la spirale d'antenne (12).

9. Carte selon la revendication précédente, **caractérisé en ce que** la spirale d'antenne (12) s'étend jusqu'au bord de la carte.

10. Carte selon l'une des revendications 8 à 9, **caractérisée en ce que** ledit insert est recouvert d'au moins une feuille ou couche isolante de recouvrement ou de décoration sur chacune de ses faces principales.

11. Carte selon l'une des revendications 8 à 10, **caractérisée en ce que** la spirale d'antenne (12) ou la première plaque de condensateur (4) est amincie localement au niveau de l'emplacement (9) de la seconde plaque (5) de condensateur.
